# EUROPÄISCHE PATENTANMELDUNG

(11) **EP 1 619 047 A1**
(43) Veröffentlichungstag der Anmeldung: **25.01.2006**
(21) Anmeldenummer: 05010500.6
(22) Anmeldetag: 13.05.2005
(51) Int. Cl.: B60B 33/00, B62B 3/14

(54) **Handbetätigter Transportwagen**

(30) Priorität: 19.07.2004 DE 202004011320 U
(71) Anmelder: Brüder Siegel GmbH + Co. KG, 89343 Jettingen-Scheppach (DE)
(72) Erfinder: Schlichtmeier, Jens, 89362 Offingen (DE)
(74) Vertreter: Grättinger & Partner (GbR)

(57) **Zusammenfassung**

Bei einem handbetätigte Transportwagen, insbesondere einem Einkaufswagen, mit einem eine Mehrzahl von Rollen aufweisenden Fahrgestell und einer Warenaufnahme ist zumindest ein Teil der Rollen als Lenkrollen (1) ausgeführt mit jeweils einem Rad (2), welches um eine horizontale Achse (3) drehbar in einer Gabel (4) gelagert ist, welche ihrerseits um eine vertikale Achse (9) schwenkbar an einem Rollenträger des Transportwagens montiert ist. Dabei ist eine die Gabel frontseitig und seitlich umgebende Schutzglocke (19) vorgesehen. Zwischen der Gabel (4) und der Schutzglocke (19) ist eine Adapterklammer (12) angeordnet, die mittels mindestens einer Klaue (16) in eine Vertiefung an der Gabel (4) eingreift und an der die Schutzglocke (19) mittels zueinander korrespondierender Rastelemente verspannt ist.

## Beschreibung

Die vorliegende Erfindung betrifft einen handbetätigten Transportwagen, insbesondere einen Einkaufswagen, mit einem eine Mehrzahl von Rollen aufweisenden Fahrgestell und einer Warenaufnahme, wobei zumindest ein Teil der Rollen als Lenkrollen ausgeführt ist mit jeweils einem Rad, welches um eine horizontale Achse drehbar in einer Gabel gelagert ist, welche ihrerseits um eine vertikale Achse schwenkbar an einem Rollenträger des Transportwagens montiert ist, wobei eine die Gabel frontseitig und seitlich umgebende Schutzglocke vorgesehen ist.

Einkaufswagen und andere Transportwagen weisen regelmäßig ein Fahrgestell mit einer Mehrzahl von Rollen auf, von denen im Hinblick auf die erforderliche Manövrierbarkeit des Transportwagens zumindest ein Teil als Lenkrollen ausgeführt ist. Bei solchen Lenkrollen ist die Gabel so gestaltet, daß das Rad um einen bestimmten Nachlauf zu der Schwenkachse der Gabel versetzt auf der Oberfläche aufsteht.

Um die Gefahr einer Beschädigung des Inventars von Selbstbedienungsgeschäften durch Einkaufswagen zu reduzieren, ist es bekannt, oberhalb der Rollen sog. Abweisringe, die über die Rollen hinausstehen, anzuordnen. Diese Abweisringe können ihre Aufgabe allerdings nur dann erfüllen, wenn ihre Anordnung hinsichtlich der Höhe der Lage einer Bande des Ladeninventars entspricht. Vor diesem Hintergrund sind Einkaufswagen in der Vergangenheit entsprechend der eingangs angegebenen Bauweise zum Teil auch mit Lenkrollen ausgestattet worden, bei denen zum Schutz des Ladeninventars jeweils eine die Gabel frontseitig und seitlich umgebende Schutzglocke vorgesehen ist. Die entsprechenden Schutzglocken wurden dabei vor der Montage der Lenkrolle an dem Rollenträger des Einkaufswagens über die Gabel gestülpt.

Aufbauend auf dem vorstehend aufgezeigten Stand der Technik liegt der vorliegenden Erfindung die Aufgabe zugrunde, einen gattungsgemäßen Transportwagen bereitzustellen, der sich gegenüber dem Stand der Technik durch eine reduzierte Lärmentwicklung auszeichnet.

Gelöst wird diese Aufgabenstellung gemäß der vorliegenden Erfindung, indem an den Lenkrollen des Transportwagens zwischen der Gabel und der Schutzglocke eine Adapterklammer angeordnet ist, die mittels mindestens einer Klaue in eine Vertiefung an der Gabel eingreift und an der die Schutzglocke mittels zueinander korrespondierender Rastelemente verspannt ist. Die vorliegende Erfindung baut somit auf der Erkenntnis auf, daß ein nicht zu vernachlässigender Anteil des Lärms, der entsteht, wenn gattungsgemäße Transportwagen nach dem Stand der Technik über einen unebenen Untergrund geschoben werden, auf ein Anschlagen der Schutzglocken an die jeweils zugeordnete Gabel der betreffenden Lenkrolle zurückgeht. Genau dieser Lärmanteil wird in Anwendung der vorliegenden Erfindung dadurch eliminiert, daß die Schutzglocken nicht lediglich über die Gabeln der Lenkrollen gestülpt werden, sondern vielmehr in spezifischer Art und Weise an den Gabeln der Lenkrollen montiert und fixiert werden, nämlich unter Verwendung einer zwischen der Gabel und der zugeordneten Schutzglocke angeordneten, an der Gabel fixierten Adapterklammer, auf welche die jeweilige Schutzglocke aufgespannt wird. Dabei ist die Montage der Schutzglocke trotz der in Anwendung der Erfindung erzielbaren wirkungsvollen Lärmminderung vergleichsweise einfach; und die Mehrkosten, die bei erfindungsgemäßen Transportwagen mit der Herstellung der Adapterklammer verbunden sind, werden durch die erzielbaren Vorteile mehr als aufgewogen.

Eine erste bevorzugte Weiterbildung des erfindungsgemäßen Transportwagens zeichnet sich dadurch aus, daß die Vertiefung als eine an der Gabel im wesentlichen ringförmig umlaufende Umfangsnut ausgeführt ist. Dementsprechend kann die mindestens eine Klaue der Adapterklammern vergleichsweise großformatig ausgeführt sein, was im Hinblick auf einen auch heftigen Stößen auf die Schutzglocke standhaltenden festen Sitz der Schutzglocke günstig ist. In diesem Sinne ist es besonders vorteilhaft, wenn die Klaue(n) jeder Adapterklammer über mindestens 25%, besonders bevorzugt mindestens 35% des Umfangs der Gabel in deren Umfangsnut eingreift/eingreifen. Eine solche Umfangsnut kann insbesondere zwischen einem Gabel-Unterteil, welches nach unten hin in zwei Wangen ausläuft, und einem relativ zum Gabel-Unterteil drehbaren GabelOberteil vorgesehen sein. In diesem Fall hält die Schutzglocke einen Abstand zu dem Gabeloberteil ein, um die freie Schwenkbarkeit der Lenkrolle nicht zu behindern.

Bevorzugt weist jede Adapterklammer zwei Seitenteile auf, die über eine Verbindungsspange miteinander verbunden sind. Die Verbindungsspange bewirkt dabei eine Fixierung der an der Gabel vormontierten Adapterklammer, indem sie deren Klaue(n) in der Umfangsnut oder sonstigen Vertiefung der Gabel hält. Nach dem Aufsetzen der Schutzglocke preßt bevorzugt diese die Klaue(n) der zugeordneten Adapterklammer in die Umfangsnut bzw. sonstige Vertiefung der Gabel, indem eine Innenfläche der Schutzglocke stramm an der zugeordneten Adapterklammer im Bereich der Klaue(n) anliegt.

Insbesondere kann die vorstehend erwähnte Verbindungsspange frontseitig angeordnet sein und in eine frontseitige Aussparung der Gabel eingreifen. Insbesondere kann hierzu die Verbindungsspange eine die frontseitige Aussparung der Gabel nach oben begrenzende Kante untergreifen. Durch das Eingreifen der Verbindungsspange in die genannte Aussparung der Gabel wird eine Verdrehsicherung bereitgestellt. Ferner unterstützt diese Gestaltung, daß die Einheit aus Adapterklammer und Schutzglocke nicht nach oben von der Gabel abgezogen werden kann. Somit trägt bei dieser Weiterbildung der Erfindung die Verbindungsspange zusätzlich zu ihrer die Montage erleichternden Funktion auch zu einem sicheren Halt der Adapterklammer und somit mittelbar auch der Schutzglocke an der Gabel der Lenkrolle bei.

Besonders bevorzugt umfassen die vorstehend angesprochenen Rastelemente zwei auf den Seitenteilen angeordnete, einander im wesentlichen gegenüberliegende Rastvorsprünge, die in korrespondierende Rastaussparungen in der Schutzglocke eingreifen. Dies ist günstig im Hinblick auf einen möglichst festen Halt der Schutzglocke auf der Adapterklammer, ohne daß sich hierdurch eine unnötig aufwendige Montage ergäbe. Die Seitenteile können dabei im Bereich der Rastvorsprünge einen Abstand zu der Gabel einhalten, insbesondere indem die Seitenteile stärker gewölbt sind als die Gabel in ihren innerhalb der Seitenteile liegenden Abschnitten und randseitig an der Gabel anliegen. Dies gestattet, daß sich die Seitenteile der Adapterklammer bei der Montage der Schutzglocke federnd nachgiebig nach innen in Richtung auf die Gabel verformen, um, sobald die Schutzglocke ihre endgültige Position erreicht hat, wieder auszufedern und dabei die beiden Rastvorsprünge der Adapterklammer in die korrespondierenden Rastaussparungen der Schutzglocke einzubringen. Eine Demontage der Schutzglocke ist ohne eine Beschädigung der Schutzglocke, der Adapterklammer und der Lenkrolle möglich, indem die Seitenteile der Adapterklammer mit den darauf angeordneten Rastvorsprüngen nach innen in Richtung auf die Gabel gedrückt werden, so daß die Rastvorsprünge und die Rastaussparungen außer Eingriff kommen und die Schutzglocke von der Adapterklammer nach oben abgezogen werden kann.

An der Innenwand der Schutzglocke können keilförmige Führungsschrägen vorgesehen sein, die sich insbesondere vom unteren Rand der Schutzglocke in Richtung auf die Rastaussparungen hin konisch verjüngen können. Dies ist wiederum eine im Hinblick auf die Montage der Schutzglocke besonders günstige Weiterbildung der Erfindung.

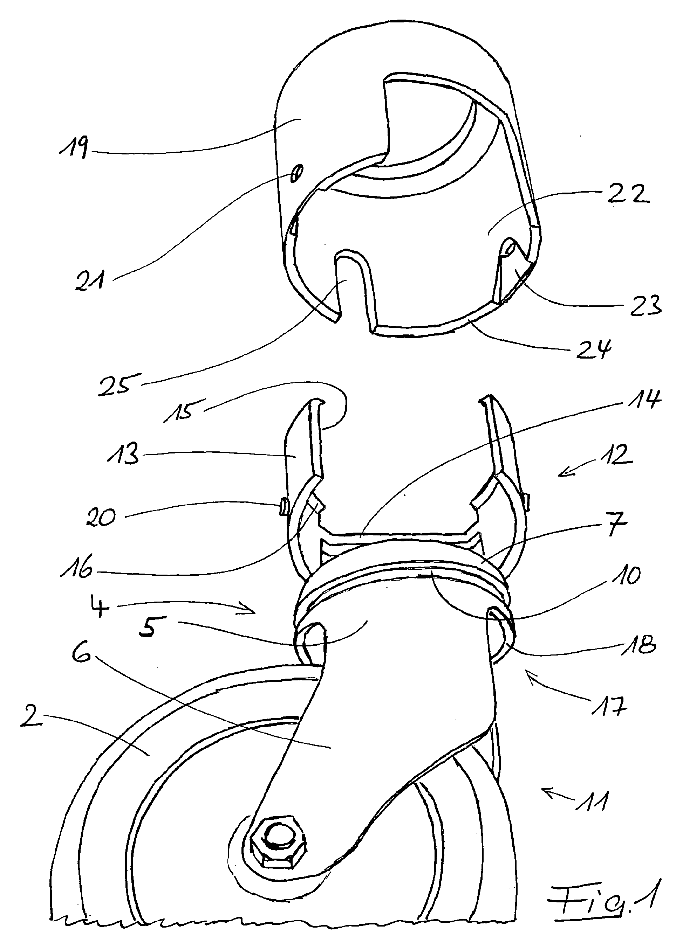

Im folgenden wird die vorliegende Erfindung anhand eines in der Zeichnung veranschaulichten bevorzugten Ausführungsbeispiels näher erläutert. Dabei zeigt
- Fig. 1: die einzelnen Komponenten einer für einen erfindungsgemäß ausgeführten Einkaufswagen vorgesehen Lenkrolle,

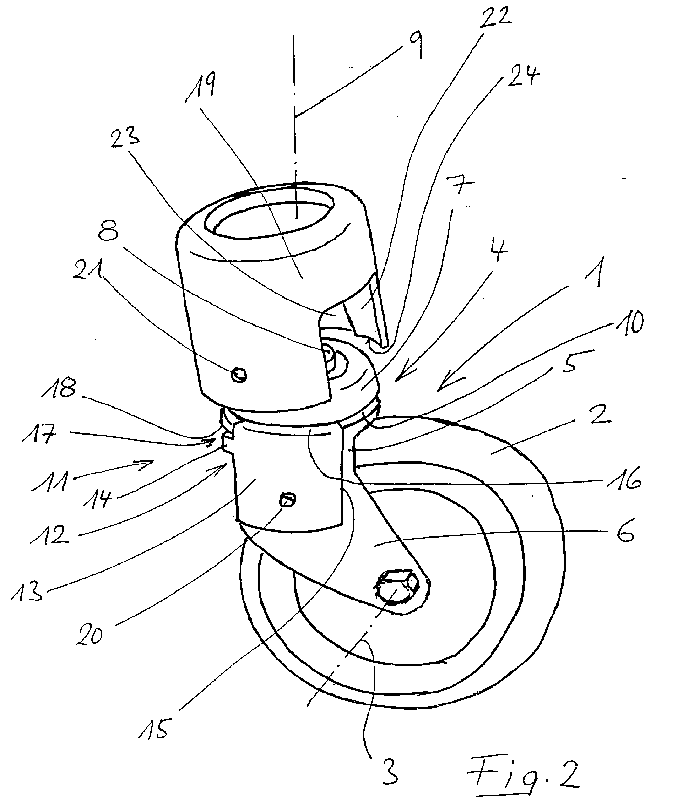

- Fig. 2: in perspektivischer Ansicht von links eine für einen erfindungsgemäß ausgeführten Einkaufswagen vorgesehene, die in Fig. 1 gezeigten Komponenten aufweisende Lenkrolle während der Montage der Schutzglocke und

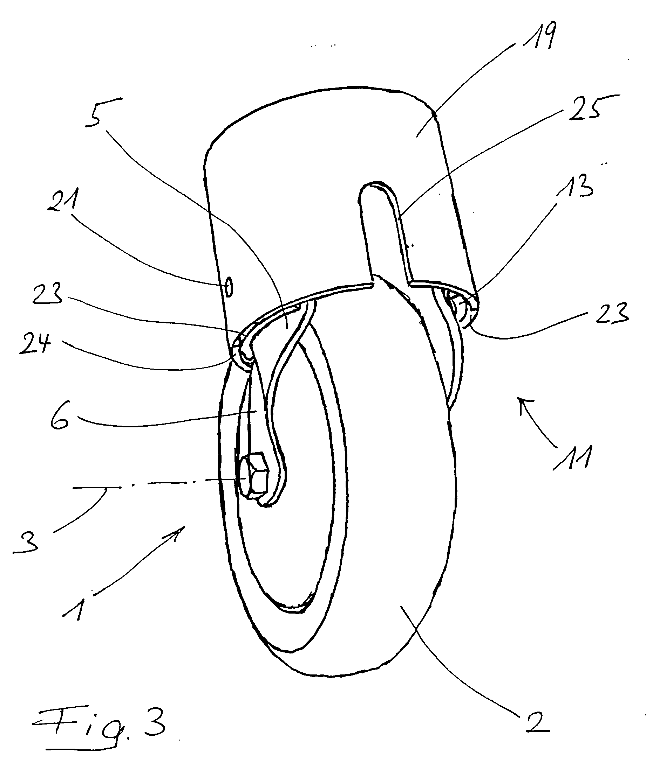

- Fig. 3: die Lenkrolle nach Fig. 1 nach Abschluß der Montage der Schutzglocke in perspektivischer Ansicht schräg von vorne-rechts-unten.

Die in der Zeichnung veranschaulichte Lenkrolle 1 umfaßt ein Rad 2, welches um eine horizontale Achse 3 drehbar in einer Gabel 4 gelagert ist. Die Gabel 4 umfaßt ein Unterteil 5, welches nach unten hin in zwei Wangen 6 ausläuft, und ein glockenförmiges Oberteil 7, welches mit dem Unterteil 5 über ein entsprechendes Lager um die vertikale Schwenkachse 9 drehbar verbunden ist. Aus dem Oberteil 7 steht nach oben hin ein in dieses eingepreßter Lagerring 8 vor, der bei montierter Lenkrolle an einem Rollenträger des Einkaufswagens anliegt. Zwischen dem Oberteil 7 und dem Unterteil 5 der Gabel 4 verläuft eine ringförmig umlaufende Umfangsnut 10.

Auf das Unterteil 5 der Gabel 4 ist von der Frontseite 11 her eine aus Kunststoff (z.B. PA) bestehende Adapterklammer 12 aufgesteckt. Diese umfaßt zwei Seitenteile 13 und eine diese frontseitig miteinander verbindende Verbindungsspange 14. Die Seitenteile 13 sind im wesentlichen in Form eines Abschnitts einer Zylinderschale ausgeführt. Dabei sind die Seitenteile 13 der Adapterklammer 12 geringfügig stärker gewölbt als die Gabel 4 in ihren innerhalb der Seitenteile liegenden Abschnitten, so daß die Seitenteile 13 nur randseitig an der Gabel anliegen, zwischen den Seitenrändern 15 indessen einen Abstand zu der Gabel 4 einhalten. Am oberen Rand weist jedes Seitenteil eine radial einwärts gerichtete, längliche Klaue 16 auf, die auf einer Länge von etwa 20% der Länge der Umfangsnut 10 in diese eingreift. Die Verbindungsspange 14 greift in eine frontseitige Aussparung 17 der Gabel 4 ein, indem sie die die Aussparung 17 begrenzende Kante 18 des Unterteils 5 der Gabel 4 untergreift.

Auf die auf der Gabel 4 vormontierte Adapterklammer 12 wird eine - ebenfalls aus Kunststoff (z.B. PT) bestehende - Schutzglocke 19 aufgesetzt, wobei die die Gabel 4 frontseitig und seitlich umgebende Schutzglocke 19 in ihrem fertig montierten Zustand mit der Adapterklammer 12 verspannt ist. Hierzu ist auf jedem Seitenteil 13 der Adapterklammer 12 etwa mittig zwischen den beiden Seitenrändern 15 ein Rastvorsprung 20 angeordnet, der bei montierter Schutzglocke 19 in eine korrespondierende Rastaussparung 21 der Schutzglocke 19 eingreift.

An der Innenwand 22 der Schutzglocke 19 sind zwei keilförmige Führungsschrägen 23 vorgesehen, die sich von dem unteren Rand 24 der Schutzglocke 19 bis zu den Rastaussparungen 21 erstrecken und sich in Richtung auf diese hin konisch verjüngen. Frontseitig weist die Schutzglocke 19 eine Aussparung 25 auf, die während der Montage der Lenkrolle 1 an dem Rollenträger eines Einkaufswagens einen Zugang für ein Werkzeug in das Innere der Gabel 4 bildet.

## Patentansprüche

1. Handbetätigter Transportwagen, insbesondere Einkaufswagen, mit einem eine Mehrzahl von Rollen aufweisenden Fahrgestell und einer Warenaufnahme, wobei zumindest ein Teil der Rollen als Lenkrollen (1) ausgeführt ist mit jeweils einem Rad (2), welches um eine horizontale Achse (3) drehbar in einer Gabel (4) gelagert ist, welche ihrerseits um eine vertikale Achse (9) schwenkbar an einem Rollenträger des Transportwagens montiert ist, wobei eine die Gabel frontseitig und seitlich umgebende Schutzglocke (19) vorgesehen ist,
**dadurch gekennzeichnet,**
**daß** zwischen der Gabel (4) und der Schutzglocke (19) eine Adapterklammer (12) angeordnet ist, die mittels mindestens einer Klaue (16) in eine Vertiefung an der Gabel (4) eingreift und an der die Schutzglocke (19) mittels zueinander korrespondierender Rastelemente verspannt ist.

2. Transportwagen nach Anspruch 1,
**dadurch gekennzeichnet,**
**daß** die Vertiefung als eine an der Gabel (4) im wesentlichen ringförmig umlaufende Umfangsnut (10) ausgeführt ist.

3. Transportwagen nach Anspruch 1 oder Anspruch 2,
**dadurch gekennzeichnet,**
**daß** die Adapterklammer (12) zwei Seitenteile (13) aufweist, die frontseitig über eine Verbindungsspange (14) miteinander verbunden sind.

4. Transportwagen nach Anspruch 3,
**dadurch gekennzeichnet,**
**daß** die Verbindungsspange (14) in eine Aussparung (17) der Gabel(4) eingreift.

5. Transportwagen nach Anspruch 3 oder Anspruch 4,
**dadurch gekennzeichnet,**
**daß** die Rastelemente zwei auf den Seitenteilen (13) angeordnete, einander im wesentlichen gegenüberliegende Rastvorsprünge (20) umfassen, die in korrespondierende Rastaussparungen (21) in der Schutzglocke (19) eingreifen.

6. Transportwagen nach einem der Ansprüche 3 bis 5,
**dadurch gekennzeichnet,**
**daß** die Seitenteile (13) im Bereich der Rastvorsprünge (20) einen Abstand zu der Gabel (4) einhalten.

7. Transportwagen nach Anspruch 6,
**dadurch gekennzeichnet,**
**daß** die Seitenteile (13) stärker gewölbt sind als die Gabel (4) in ihren innerhalb der Seitenteile liegenden Abschnitten und zwischen den an der Gabel anliegenden Seitenrändern (15) einen Abstand zu der Gabel einhalten.
